# FASCICULE DE BREVET EUROPEEN

(11) **EP 2 856 135 B1**
(45) Date de publication et mention de la délivrance du brevet: **11.05.2016**
(21) Numéro de dépôt: 13729985.5
(22) Date de dépôt: 17.05.2013
(51) Int. Cl.: G01N 27/414

(54) **CAPTEUR ISFET AVEC DISPOSITIF DE CONTROLE INTEGRE**
SENSOR MIT INTEGRIERTER STEUERVORRICHTUNG
SENSOR WITH INTEGRATED CONTROL DEVICE

(30) Priorité: 25.05.2012 FR 1254859
(43) Date de publication de la demande: 08.04.2015
(73) Titulaire: Hemodia, 31670 Labège (FR)
(72) Inventeur: SANT, William, F-31450 Montgiscard (FR)
(74) Mandataire: Ipside
(86) Numéro de dépôt international: PCT/FR2013/051089
(87) Numéro de publication internationale: WO 2013/175110

(56) Documents cités:
- KWON D H ET AL: "A very large integrated pH-ISFET sensor array chip compatible with standard CMOS processes", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, vol. 44, no. 1-3, 1 octobre 1997 (1997-10-01), pages 434-440, XP004117157, ISSN: 0925-4005, DOI: 10.1016/S0925-4005(97)00207-4
- A. POGHOSSIAN ET AL.: "Functional Testing and Characterisation of ISFETs on Wafer Level by Means of a Micro-droplet Cell", SENSORS, vol. 6, 7 avril 2006 (2006-04-07), pages 397-404, XP002691684,
- ZHAO S ET AL: "A high performance ethanol sensor based on field-effect transistor using a LaFeO3 nano-crystalline thin-film as a gate electrode", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, vol. 64, no. 1-3, 1 juin 2000 (2000-06-01) , pages 83-87, XP004199290, ISSN: 0925-4005, DOI: 10.1016/S0925-4005(99)00488-8
- KIMURA J ET AL: "An integrated SOS/FET multi-biosensor", SENSORS AND ACTUATORS, ELSEVIER, SWITZERLAND, vol. 9, no. 4, 1 juillet 1986 (1986-07-01) , pages 373-387, XP026575429, ISSN: 0250-6874, DOI: 10.1016/0250-6874(86)80069-5 [extrait le 1986-07-01]

## Description

La présente invention appartient au domaine des dispositifs de mesure d'espèces chimiques en milieu liquide, à l'aide de capteurs mettant en oeuvre des transistors à effet de champs dotés de couches sensibles.

Elle a pour objet un capteur pour la mesure d'une espèce ionique en solution, comprenant au moins un transistor ISFET et un transistor MOSFET montés en parallèle, la source et le drain leur étant communs, cette structure permettant de vérifier le bon fonctionnement du capteur en milieu sec. L'invention a également pour objet un procédé de fabrication d'un tel capteur pour la mesure d'une espèce ionique dans une solution, le procédé comprenant au moins un test de validation à sec durant ladite fabrication. L'espèce ionique concernée peut être, soit un composé présent dans la solution, soit le produit d'une réaction biochimique avec un composé d'origine biologique, auquel cas l'ISFET est un BioFET.

On sait que dans un contexte de fabrication en grandes séries de capteurs intégrant des composants électroniques, les problématiques liées à la fiabilité et à la reproductibilité des performances des capteurs prennent une importance cruciale. La question des coûts de production est également très sensible. En particulier, l'assemblage des composants sur les circuits imprimés peut représenter de 55% à 85% du prix total du capteur.

Un certain nombre de techniques peuvent être mises en oeuvre pour contrôler le bon état des capteurs. Ces techniques cependant, sont toutes basées sur des tests électriques, et sont inadaptées au contrôle des capteurs chimiques et biochimiques de type ISFET, qui sont destinés à fonctionner en milieu liquide.

Un capteur ISFET (pour Ion Sensitive Field Effect Transistor) est essentiellement constitué d'un transistor à effet de champs sensible aux ions. Il est dérivé du transistor classique, appelé MOSFET (Metal Oxyde Silicium Field Effect Transistor). Dans un MOSFET, la grille est réalisée par une électrode métallique séparée du canal par une couche isolante. Dans un ISFET, la fonction de grille est assurée par un système composé d'une électrode de référence et d'une membrane sensible à la présence d'une espèce ionique dans l'électrolyte à analyser, laquelle est séparée du canal par une couche isolante. Une variation de potentiel est générée au niveau de la couche sensible recouvrant l'ISFET, par exemple par une réaction chimique se produisant au contact du soluté, et le signal généré est transmis et peut être mesuré, enregistré, ou traité d'une autre manière en fonction de l'utilisation prévue. La membrane peut en outre être fonctionnalisée pour être sensible à une espèce chimique ou biochimique donnée. Dans ce cas, la couche sensible contient un composé réagissant avec ladite espèce chimique ou biochimique en induisant une variation du pH qui est détectée par la grille. On appelle ENFET (Transistor à Effet de Champ Enzymatique) un ISFET dont la membrane sensible est pourvue d'une couche comprenant une enzyme immobilisée par un polymère, et plus généralement BioFET, un ISFET dont la couche sensible réagit avec un composé d'origine biologique. Le terme CHEMFET (pour Chemical Field Effect Transistor) est aussi parfois employé pour désigner de manière générique les capteurs chimiques à effet de champ aptes à détecter tout type de composés (ions, molécules, gaz, ...).

La présente invention concerne tout composant de type ISFET, qu'il soit ou non fonctionnalisé.

Par extension, on appelle capteur ISFET, un circuit intégré (ou puce électronique) comprenant au moins un composant ISFET qui est relié à des pistes métalliques pour assurer la polarisation et la conduction du courant électrique apparaissant au niveau de l'ISFET. Un ou plusieurs ISFET peuvent être associés sur un même support, appelé PCB (pour Printed Circuit Board), éventuellement accompagnés d'autres composants assurant d'autres fonctionnalités. Chaque composant doit être fixé sur un PCB, les connexions sont réalisées, puis l'ensemble est encapsulé, hormis la grille qui devra être en contact avec le soluté. La puce avec ses connexions, fixée et encapsulée sur PCB, sera ensuite connectée dans un appareil ou un dispositif de mesure plus complexe.

La fabrication en masse commence par la réalisation des composants ISFET sur une plaquette de silicium à l'aide des techniques de fabrication collective bien connues de la microélectronique. On obtient sur chaque plaquette un grand nombre de composants (communément quelques centaines à quelques milliers d'ISFET sur une plaquette de 6, 8 ou 12 pouces de diamètre).

Cette fabrication, qui correspond à la "partie silicium" du processus, comporte elle-même plusieurs étapes. Les ISFET sont ensuite séparés par découpe de la plaquette, reportés individuellement sur des circuit imprimés, connectés et encapsulés. Malgré tout le soin apporté et les avancées des technologies modernes, des défauts de fabrications peuvent se produise à chaque étape, de sorte que les rebuts en fin de processus peuvent être très nombreux. Même si l'amélioration des procédés industriels peut encore contribuer à réduire le taux de puces défectueuses, les contraintes techniques et économiques ne laissent pas entrevoir la possibilité d'avoir 100% de puces en bon état de fonctionnement.

Dans ce contexte, il est d'un intérêt primordial pour les fabricants de puces, de disposer d'un moyen de contrôle des puces ISFET obtenues. Un tel moyen doit être simple, rapide et totalement fiable. Il doit permettre non seulement de repérer les puces défectueuses, mais aussi de les trier pour ne livrer que celles qui sont fonctionnelles à leurs clients (qui sont en général, des fabricants d'appareils incorporant de tels capteurs). Il doit en outre pouvoir être mis en oeuvre dans une production de masse et peu onéreux.

Différentes méthodes de contrôle reposant sur des tests électriques ont été adoptées jusqu'à présent.

Une première méthode consiste à contrôler globalement une plaquette de silicium en intercalant quelques composants MOSFET parmi les composants ISFET sur la plaquette. On teste seulement ces composants de test, ceux-ci étant judicieusement placés sur la plaquette. La méthode permet de s'assurer du bon déroulement général de la fabrication des plaquettes, ce qui donne une idée du rendement en puces fonctionnelles atteignable à partir des ISFET issus d'une plaquette donnée. Cependant, cette méthode ne permet pas d'identifier quels sont les composants défectueux sur une plaquette pour pouvoir les éliminer avant assemblage. Elle n'apporte aucune information relative aux étapes suivantes, pas même une indication sur le rendement en bons composants après assemblage et donc sur le prix de revient par pièce (puce à l'unité). Enfin, la mauvaise qualité d'un lot peut difficilement être imputée au fondeur ou au packageur, ce qui est source potentielle de litiges.

Une autre façon de procéder consiste à tester un composant MOSFET implanté sur la même puce à proximité de l'ISFET. Il est possible de tester le bon état du MOSFET, par exemple par un test sous pointe classique, ce qui rend compte de l'intégrité de la zone, mais pas du composant ISFET lui-même. Cette méthode permet de détecter des défauts affectant des composants voisins (tels que la mauvaise homogénéité des dépôts de métallisation, oxydes, nitrures, les défauts de passivation, ou les problèmes de gravures et d'implantation, etc. Néanmoins, elle ne permet pas de déceler certains défauts n'affectant que le composant ISFET (rayure, claquage dû à des décharges électrostatiques, court-circuit ou circuit ouvert entre la source et le drain...). Elle permet donc essentiellement de vérifier le bon déroulement du procédé de fabrication des plaquettes de silicium et d'estimer le rendement en composants fonctionnels à l'issue de la "partie silicium". Là encore, il est difficile de fixer un prix de revient final par pièce.

Il existe d'autres méthodes de contrôle, qui permettent de tester électriquement 100% des ISFET, mais qui sont réalisées uniquement en laboratoire du fait de la lourdeur de leur mise ne oeuvre. On citera la méthode de la goutte de mercure, par laquelle on vérifie le fonctionnement de l'ISFET après avoir déposé une goutte de mercure polarisé sur la grille. La goutte doit recouvrir toute la surface de la grille sans créer de court-circuit ailleurs sur la puce. On note que le mercure étant un élément toxique, son usage est peu recommandé. D'ailleurs, très peu de publications font état de cette technique.

On citera également la méthode décrite par Arashak Poghossian et coll. (Sensors 2006, 6, 397-404) qui consiste à déposer une micro-goutte d'une solution électrolytique de composition connue sur la grille de l'ISFET et à tester le composant. On associe pour cela une cellule fluidique permettant d'amener une électrode de référence et la solution sur la surface sensible de l'ISFET, à une station de test sous pointe classique. La cellule se déplace sur la plaquette et permet de polariser le composant à caractériser. La mesure est réalisée par un analyseur paramétrique. Une cellule dédiée est nécessaire pour ce test et limite le nombre de têtes de mesure. La méthode permet de vérifier le bon déroulement du procédé de fabrication d'une plaquette et d'estimer le rendement en composants ISFET fonctionnels. Elle peut aussi estimer la sensibilité au pH de chaque capteur. Toutefois, les traces laissées par l'électrolyte sur la plaquette doivent être nettoyées en fin de test pour éviter une mesure erronée. Toutes ces raisons font qu'une telle méthode est inenvisageable sur une production de masse. Au demeurant, elle ne permet pas d'effectuer les contrôles lors des phases d'assemblage.

La publication de Kwon et al., dans Sensors and Actuators B (Chemical), 1997, 44: 434-440, décrit un capteur pour la mesure de la concentration dans une solution d'une espèce sous forme ionique ou apte à produire un composé ionique. Ce capteur comprend les deux composants suivants montés en parallèle : un transistor ISFET, qui comporte un drain, une source et une membrane isolante sensible à l'espèce dont la concentration doit être mesurée, et qui est relié à une électrode de référence ; et un transistor MOSFET, qui comporte un drain, une source, et une grille formée d'une couche isolante recouverte d'une électrode métallique.

Finalement, pour s'assurer de l'intégrité d'un capteur ISFET donné, il n'existe qu'un moyen : le tester après assemblage en l'immergeant dans une solution électrolytique. Cette voix est adoptée uniquement pour des applications très spécifiques, supportant des coûts élevés. Il est bien évident qu'une telle mesure ne peut pas être mise en oeuvre à l'échelle industrielle, et pour des applications usuelles, car elle est trop longue et onéreuse à réaliser. En outre, elle suppose que le processus de fabrication des capteurs va à son terme quel que soit l'état des composants. En effet, dans ce schéma tous les composants ISFET sont assemblés sur PCB et conditionnés, qu'ils soient fonctionnels ou pas. Ceci représente une perte de temps et de moyens injustifiée.

Or, pour répondre aux besoins en équipements, en particulier en dispositifs médicaux, performants et fiables, il est indispensable de proposer un mode de fabrication à grande échelle, automatisable et modulable, permettant de produire rapidement à des coûts raisonnables des capteurs dotés des fonctionnalités requises, pouvant être montés aisément dans des dispositifs médicaux, souvent à usage unique. Dans ce contexte de fabrication en grande série de capteurs chimiques et biochimiques, les problématiques liées à la reproductibilité des performances des capteurs deviennent cruciales, ainsi que les niveaux de coûts. Jusqu'à présent aucune des méthodes connues ne permet de répondre à ce besoin.

L'objectif de la présente invention est de proposer un système de contrôle des capteurs ISFET dans une production de masse remédiant aux problèmes ci-dessus mentionnés. Un objectif est de contrôler 100% des composants ISFET obtenus au cours d'une fabrication. Un autre objectif est de contrôler tous les composants ISFET d'une plaquette (probe), mais aussi de contrôler le bon déroulement du processus d'assemblage des capteurs et de s'affranchir de problèmes de connectique (court-circuit, circuit ouvert...). *In fine,* le procédé doit diminuer les coûts de production, notamment en évitant d'assembler, fonctionnaliser, conditionner des capteurs défectueux.

Le dispositif objet de l'invention consiste ainsi en un capteur pour la mesure de la concentration d'une espèce dans une solution, ladite espèce étant sous forme ionique ou apte à produire un composé ionique, le capteur comprenant au moins deux composants, à savoir i) un transistor ISFET doté d'un drain, d'une source, d'une membrane isolante sensible à ladite espèce, et relié à une électrode de référence, et ii) un transistor MOSFET doté d'un drain, d'une source, d'une grille formée d'une couche isolante recouverte d'une électrode métallique, lesdits deux composants étant montés en parallèle, la source et le drain leur étant communs.

Le capteur comprend donc un composant ISFET qui est associé à un composant MOSFET, mais contrairement à des montages classiques dans lesquels les composants sont placés côte à côte sur une plaquette de silicium, ils sont ici structurellement imbriqués, la géométrie adoptée par les zones traitées (dopées) pour jouer le rôle de source et de drain étant agencée de telle sorte que la source et le drain sont partagés par les deux composants. Les grilles sont par contre distinctes. Sur la partie MOSFET, une couche électriquement isolante (par exemple un oxyde de silicium très pur, appelé oxyde de grille), surmontée d'une couche métallique (celle-ci formant l'électrode de grille) recouvre le canal pour réaliser la grille. Par contre, au niveau de l'ISFET, c'est une membrane isolante et sensible à l'espèce recherchée qui est déposée. Les composants MOSFET et ISFET sont donc montés selon un circuit électrique équivalent en parallèle.

La membrane peut comporter plusieurs couches associées, comme on le verra plus loin, pour réagir à la présence d'une espèce ionique et/ou provoquer une réaction dont un produit est une espèce ionique, induisant une variation du pH détectable par l'ISFET. Cette membrane assure en outre l'isolation électrique et l'étanchéité vis-à-vis de la solution.

A noter par ailleurs que, de par sa fonction, l'électrode de référence fait partie intégrante du transistor ISFET. Toutefois, elle n'est généralement pas physiquement placée sur le composant, mais y est simplement connectée. La structure décrite ci-après n'en est pas essentiellement modifiée.

Cet ensemble est relié à des pistes métalliques pour assurer la polarisation et la conduction du courant électrique, comme si un seul composant était concerné. Le MOSFET a pour rôle de permettre le contrôle. On peut ainsi tester électriquement le capteur, sans le plonger dans le milieu liquide qui est sa destination d'usage. Une réponse électrique normale par rapport à une réponse attendue prédéterminée, obtenue lors d'une mise sous tension du dispositif constituera la preuve que le composant ISFET (et le MOSFET de contrôle) fonctionne bien. Un tel test peut être pratiqué à différentes étapes de fabrication du capteur, ce qui permet d'éliminer les pièces défectueuses sans poursuivre le processus de fabrication pour ce qui les concerne.

Selon une caractéristique avantageuse, le capteur selon l'invention comprend trois plots de contact, à savoir deux plots de contact reliés respectivement à la source et au drain communs, et un plot de contact relié à la grille du MOSFET. Ce troisième plot sert uniquement à commander le composant MOSFET lors des tests.

On comprend que, en toute rigueur, ce qui est testé n'est pas toujours un capteur fonctionnel. En effet, on peut tester un capteur dont l'assemblage est terminé, et ce avant ou durant son utilisation. On peut aussi de manière très avantageuse, tester les composants ISFET en fin de la phase silicium, avant de les monter sur un circuit imprimé; à un stade où le capteur n'existe pas encore puisque justement, il est en cours d'assemblage.

En effet, la source et le drain étant communs au MOSFET et à l'ISFET, il est possible de tester l'ISFET lui-même, à l'exception la couche sensible qui est déposée dans une phase ultérieure. On pourra contrôler ainsi l'état des connexions (ou "bonding") de la source, du drain et détecter d'éventuels défauts dans le canal (court circuit, impuretés...), ceci tout au long de la fabrication du capteur. Ceci n'exclut pas la possibilité de tester l'intégrité du capteur alors qu'il est placé en milieu liquide.

Le capteur selon l'invention peut adopter différentes géométries et être agencé de manière variée. Il peut être réalisé à partir d'un substrat semi-conducteur conventionnel, par exemple en silicium ou en arséniure de gallium, mais aussi à partir d'un matériau polymère conducteur tel que ceux utilisés dans le domaine novateur dit de l'électronique organique. Il peut par ailleurs être réalisé communément dans un caisson P (PWell) comme il sera décrit plus en détail par la suite, mais également directement sur un substrat en silicium de type P.

Dans le cadre de la présente invention, une structure a été conçue qui réalise le montage ci-dessus présenté, tout en permettant de conserver les étapes de fabrication habituelles des ISFET classiques.

Dans un mode de réalisation avantageux, le capteur selon l'invention comprend au moins un substrat semi-conducteur présentant deux zones dopées avec des porteurs de charges électriques, formant respectivement une zone source et une zone drain séparées par un intervalle s'étendant selon un axe A, ledit intervalle constituant un canal de conduction entre lesdites deux zones sur au moins deux segments dudit axe A,
- ledit canal étant recouvert d'au moins une couche de matériau isolant électrique, elle-même recouverte d'au moins une couche d'un matériau isolant sensible à ladite espèce,
- ladite couche sensible étant nue sur un premier segment dudit axe A, pour obtenir ledit composant ISFET, et
- ladite couche sensible étant recouverte d'un métal faisant fonction d'électrode de grille sur un deuxième segment dudit axe A, pour constituer ledit composant MOSFET.

L'axe A définit ainsi un axe longitudinal selon lequel s'étend le canal, et de part et d'autre du canal, les zones formant la source et le drain. Le canal peut être classiquement rectiligne ou bien en forme de créneaux. L'axe A peut être divisé en plusieurs segments, dont un premier segment correspond à la partie ISFET et un deuxième segment correspond à la partie MOSFET. La longueur du canal correspond à l'intervalle séparant la zone source et la zone drain dans le sens transversal par rapport à l'axe A.

Ledit canal est recouvert d'au moins une couche de matériau isolant électrique pour réaliser une grille. Cette couche est elle-même recouverte d'au moins une couche d'un matériau isolant sensible à l'espèce étudiée. On note que la plupart des matériaux sensibles utilisés en microélectronique sont électriquement isolants et étanches à la solution dans laquelle le capteur est destiné à fonctionner. Le caractère isolant de la couche sensible se rapporte donc autant à sa capacité à faire barrière à l'eau qu'à ses propriétés électriques. Ladite au moins une couche sensible ne jouera son rôle que sur la partie ISFET lorsqu'elle sera en présence d'espèces en solution, puisqu'elle restera nue sur le premier segment de l'axe A. L'association de ladite au moins une couche sensible et de ladite au moins une couche de matériau isolant électrique constitue ainsi la membrane isolante sensible du transistor ISFET. La couche sensible n'a pas d'utilité particulière sur la partie MOSFET, mais son dépôt sur la couche isolante permet de garder une architecture voisine des deux transistors et ainsi d'avoir des comportements similaires, sans ajouter une étape de fabrication. Elle sera recouverte de métal faisant fonction d'électrode sur le deuxième segment de l'axe A, pour constituer le composant MOSFET.

On relève que le drain et la source sont implantés par dopage du substrat à une distance permettant le fonctionnement des transistors. Cet intervalle qui définit la longueur du canal est respecté au moins au niveau du premier et du deuxième segments de l'axe A. C'est pourquoi, de manière préférée, dans le capteur selon l'invention, la zone source et la zone drain s'étendent longitudinalement de part et d'autre de l'axe A, à une distance d₁ autorisant la conduction électrique entre elles au niveau du premier segment, et à une distance d₂ autorisant la conduction électrique entre elles au niveau du deuxième segment.

Par contre, il est avantageux de créer une partie intermédiaire, dans laquelle le courant ne peut plus circuler. Ceci peut être obtenu de différentes manières, et par exemple en augmentant la distance séparant les zones dopées. Ainsi, de manière également préférée selon l'invention, au niveau d'un segment intermédiaire compris entre le premier et le deuxième segments, la zone source et la zone drain s'étendent longitudinalement de part et d'autre de l'axe A, à une distance D interdisant la conduction électrique entre elles, de manière à obtenir une plage dépourvue de canal de conduction, qui sépare le composant ISFET et le composant MOSFET.

Selon un mode de réalisation particulier du capteur objet de la présente invention, l'intervalle compris entre la zone source et la zone drain est tel que d₁ = d₂, la distance autorisant la conduction électrique entre source et drain, c'est-à-dire la largeur du canal, étant communément de l'ordre de 5 µm à 20 µm dans les ISFET (la longueur de canal peut être plus faible dans les dispositifs très intégrés tels que ceux adaptés au séquençage du génome, à la recherche en cancérologie, neurologie ...). Ce faisant, la distance D est au moins cinq fois supérieure à d₁ ou d₂, de sorte qu'il n'y a pas de conduction dans cette plage au niveau du segment intermédiaire.

Le capteur selon l'invention peut être réalisé à partir d'un substrat semi-conducteur conventionnel, par exemple en silicium ou en arséniure de gallium. Le substrat peut être dopé N et comprendre deux zones dopées P+ formant la zone source et la zone drain (le transistor est alors de type P). Il peut inversement être doté d'un substrat P présentant deux zones dopées N+ pour former les zones source drain (le transistor est alors de type N). Cette dernière variante servira à décrire plus en détail le capteur selon l'invention, sans que celle-ci soit limitée à ce mode de réalisation, dans la mesure où le principe et la structure sont similaires dans les deux cas.

Le matériau de grille est classiquement de l'oxyde de silicium. Le capteur comporte aussi une couche d'oxyde de champ réalisée communément en oxyde de silicium. Cette couche recouvre la surface du substrat à l'exclusion de la surface de l'intervalle s'étendant selon l'axe A. Le capteur comprend de préférence également une couche de passivation qui recouvre la surface du capteur à l'exception de la membrane sensible et des plots de contact, afin notamment d'isoler les éléments électriques lorsque le capteur sera plongé dans la solution.

Dans ce cadre, il est un mode de réalisation préféré du capteur selon l'invention, où ladite au moins une couche de matériau sensible est une couche sensible aux ions H⁺. De préférence, elle est réalisée en un matériau choisi parmi le nitrure de silicium (Si₃N₄), l'oxyde d'aluminium (Al₂O₃) ou le pentoxyde de tantale (Ta₂O₅). On voit par là que différents matériaux connus peuvent être utilisés.

Selon un mode de réalisation particulier du capteur objet de l'invention, ladite couche de matériau sensible aux ions H⁺ est recouverte d'une couche d'un matériau sensible réagissant avec une espèce chimique ou biochimique, un des produits de réaction induisant une variation de pH. Cette variation est alors détectée par la couche sensible aux ions H⁺. On peut mentionner des dispositifs incorporant une ou plusieurs enzymes (réagissant par exemple avec l'urée, la créatinine, le glucose ...). On a alors affaire à des ENFET, ou à des CHEMFET, utilisés notamment pour le dosage de ces espèces dans les milieux biologiques.

Selon un autre mode de réalisation particulier du capteur objet de l'invention, ladite au moins une couche de matériau sensible est une couche sensible aux ions K⁺, Na⁺ et Li⁺, Ca⁺⁺, Cl⁻, nitrates ou ammonium, qui peut être réalisée en un matériau choisi parmi les polymères contenant un composé ionophore, les aluminosilicates modifiés par implantation ionique. On peut citer par exemple des polymères photosensibles de type polysiloxane ou poly(acétate de vinyle), contenant des composés ionophores sélectifs aux ions mentionnés. Une autre possibilité est d'utiliser des membranes d'aluminosilicate modifié, qu'une implantation ionique rend sensible à l'ion en question.

Selon un mode de réalisation particulier qui sera décrit plus loin, le capteur selon l'invention peut être constitué sur la base d'un substrat semi-conducteur en silicium dopé P qui présente deux zones dopées N+ formant la zone source et la zone drain, ledit matériau de grille étant en oxyde de silicium. De manière commune, il comportera, en plus des couches déjà décrites :
- une couche d'oxyde de champ réalisée en oxyde de silicium, qui recouvre la surface du substrat à l'exclusion de la surface de l'intervalle s'étendant selon l'axe A, et
- une couche de passivation qui recouvre la surface du capteur à l'exception de la membrane sensible et des plots de contact.

Selon une caractéristique particulièrement avantageuse, le capteur objet de la présente invention est dépourvu de charges électriques piégées au niveau de la grille de l'ISFET, de sorte qu'il peut être soumis à un test électrique de validation en milieu sec. En effet, il est apparu que, du fait que la grille est ouverte au niveau du composant ISFET, des charges y sont piégées ce qui induit des courants de fuite importants, ainsi que de fortes variations de la tension de seuil V_{T} qui caractérise la transition entre le comportement isolant ou conducteur résistif du composant. Ceci rendait le test du MOSFET peu informatif. De manière inattendue, il a été trouvé qu'il était possible de remédier à ces phénomènes et d'éliminer les charges piégées pour obtenir une bonne fiabilité et reproductibilité des tests, en soumettant le capteur à une insolation sous rayons UV.

Le capteur qui vient d'être décrit peut être fabriqué de différentes manières. Toutefois, sa conception le rend particulièrement bien adapté à une fabrication en masse. En effet, d'une part sa fabrication n'est pas plus longue que celle d'un capteur ISFET conventionnel, notamment grâce à un choix de masques judicieux lors des étapes de photolithographie et de pholithogravure. D'autre part, du fait qu'il peut être testé sans qu'il soit nécessaire de l'introduire dans une solution, il est possible de trier les capteurs défectueux en cours de fabrication pour éliminer les pièces défectueuses.

C'est pourquoi, est également objet de la présente invention, un procédé de fabrication d'un capteur de mesure d'une espèce dans une solution, ladite espèce étant sous forme ionique ou apte à produire un composé ionique, ledit capteur comprenant au moins deux composants, à savoir i) un transistor ISFET doté d'un drain, d'une source, d'une membrane isolante sensible à ladite espèce et relié à une électrode de référence, et ii) un transistor MOSFET doté d'un drain, d'une source et d'une grille formée d'une couche isolante recouverte d'une électrode métallique, le procédé comprenant au moins une étape de création d'une source et d'un drain qui sont communs à l'ISFET et au MOSFET, l'ISFET et le MOSFET étant montés en parallèle.

Les composants peuvent être réalisés avec un caisson d'isolation, par implantation de porteurs de charges électriques opposées à celles du substrat en silicium original. On dope ensuite fortement deux zones du caisson d'isolation. De manière alternative, les composants sont réalisés directement sur substrat de silicium dopé aux bonnes concentrations (auquel cas il n'y a pas de caisson d'isolation).

Selon un mode de mise en oeuvre avantageux, le procédé de fabrication comprend les étapes successives consistant à :
- doper fortement deux zones d'un substrat semi-conducteur avec des porteurs de charges électriques,
- réaliser au moins une couche de matériau isolant, comprenant un oxyde de grille,
- réaliser ladite membrane sensible à ladite espèce,
- réaliser une électrode métallique et des plots de contact,
lesdites deux zones dopées formant respectivement une source et un drain qui sont communs à l'ISFET et au MOSFET, l'ISFET et le MOSFET étant montés en parallèle.

De manière préférée, conformément au procédé de fabrication selon l'invention,
- on réalise un dopage de la zone source et de la zone drain en séparant celles-ci par un intervalle s'étendant selon un axe A, ledit intervalle constituant un canal de conduction entre lesdites deux zones sur au moins deux segments dudit axe A,
- on recouvre ledit intervalle sur lesdits au moins deux segments dudit axe A, d'au moins une couche de matériau isolant électrique apte à faire fonction de grille,
- on recouvre ladite couche de matériau isolant électrique d'au moins une couche d'un matériau isolant sensible à ladite espèce, et
- on laisse nue ladite couche sensible sur un premier segment dudit axe A, pour obtenir ledit composant ISFET,
- tandis que l'on recouvre ladite couche sensible d'un métal faisant fonction d'électrode sur un deuxième segment dudit axe A, pour obtenir ledit composant MOSFET.

Selon une caractéristique préférée du procédé de fabrication selon l'invention, lorsqu'on dope la zone source et la zone drain, on les sépare par un intervalle s'étendant selon l'axe A, tel que :
- il existe une distance d₁ et une distance d₂ autorisant la conduction électrique entre lesdites zones, respectivement au niveau du premier segment et du deuxième segment, de manière à obtenir deux canaux de conduction desservant respectivement le composant ISFET et le composant MOSFET, et
- il existe une distance D interdisant la conduction électrique entre lesdites zones au niveau d'un segment intermédiaire compris entre le premier segment et le deuxième segment, de manière à obtenir une plage dépourvue de canal de conduction, qui sépare le composant ISFET et le composant MOSFET.

De manière avantageuse, on crée deux plots de contact reliés respectivement à la source et au drain communs, et un plot de contact relié à la grille du MOSFET. On note également que, de manière commune, le procédé selon l'invention pourra comprendre en plus des étapes décrites au moins une des étapes consistant à :
- réaliser une couche d'oxyde de champ qui recouvre la surface du substrat à l'exclusion de la surface de l'intervalle s'étendant selon l'axe A, et
- réaliser une couche de passivation qui recouvre la surface du capteur à l'exception de la membrane sensible et des plots de contact.

Selon un mode de mise en oeuvre particulièrement intéressant du procédé de fabrication objet de l'invention, celui-ci comprend un test de validation en milieu sec dudit capteur consistant à :
- a) mesurer le courant Ids entre le drain et la source lorsqu'on fait varier la tension Vgs entre la grille et la source, tout en maintenant constante la tension de polarisation Vds entre la source et le drain, et enregistre la courbe caractéristique Ids = f(Vgs) ;
- b) déterminer le courant de fuite I_{off} à Vgs = 0, la tension de seuil V_{T}, et la valeur de la transconductance ;
- c) comparer les valeurs obtenues à l'étape b) à des valeurs prédéterminées de validation.

Selon une caractéristique préférée de l'invention, le procédé de fabrication du capteur comprend une étape consistant à éliminer les charges électriques piégées dans la grille de l'ISFET ou à la surface de celle-ci, avant ledit test de validation. Ce test de fonctionnalité permet de vérifier l'intégrité des tous les composants, tout au long de la chaîne de fabrication : test sur plaquettes, test après assemblage, test avant utilisation chez le client...

De manière avantageuse et simple, selon l'invention, l'élimination des charges électriques piégées au cours du procédé de fabrication ou durant le stockage, peut être obtenue en soumettant le capteur à une irradiation par rayons UV. On sait que l'effacement des mémoires EPROM est effectué en l'illuminant avec des UV-C (longueur d'onde entre 280 et 100 nm), durant 10 à 20 minutes. Cependant, ce principe n'avait jamais été utilisé pour éliminer les courants de fuites d'un ISFET.

Le mode de mise en oeuvre de cette méthode a été en outre adapté. Ainsi, selon un mode de réalisation particulier, l'élimination des charges électriques piégées est effectuée par insolation à une longueur d'onde comprise entre 200 nm et 300 nm, de préférence à 254 nm, durant 5 min à 30 min.

Le capteur selon l'invention et son procédé de fabrication permettent de résoudre le problème du contrôle de la qualité des composants ISFET fabriqués dans le cadre des technologies du silicium et de l'utilisation des techniques d'assemblage. Un rendement de capteurs fonctionnels livrés chez le client peut désormais dépasser 98%, sans incidence notable sur le prix de revient. Ceci est maintenant réalisable par un contrôle unitaire systématique de tous les capteurs, qui peut être effectué lors de chaque étape de fabrication :
- Contrôle en sortie de fonderie sur plaquette ("wafer" en anglais). L'identification des puces non conformes peut être faite par encrage ou cartographie sur fichier informatique. Une estimation du rendement peut être effectuée aussi.
- Contrôle après assemblage sur divers supports (circuits imprimés standards, supports flexibles, bobines...).
- Contrôle du capteur après une éventuelle phase de fonctionnalisation.
- Contrôle du capteur après mise en chambre fluidique ou report sur un support spécifique et avant conditionnement pour envoi chez le client.
- Test avant utilisation chez le client permettant d'éviter les phases de calibration si un problème est décelé avant.

Grâce à ce dispositif, il devient possible de contrôler la bonne marche d'un ISFET, avant de déposer la membrane sensible, et après l'assemblage des modules, de manière totalement automatisée. Le procédé de fabrication à l'aide de cet équipement remédie aux inconvénients précédemment exposés, tout en en préservant les avantages.

Le dispositif selon l'invention présente aussi l'avantage de pouvoir être contrôlé alors qu'il est placé en milieu liquide. Ceci permet, lorsque l'on souhaite réaliser des mesures de concentration d'espèces sur des longues durées dans une solution telle que par exemple le plasma sanguin ou dans des eaux naturelles, de contrôler le bon fonctionnement de l'appareillage utilisé. Cela permet également de déterminer en cas de disfonctionnement de l'appareil, si l'origine du problème est à mettre au compte de l'état du capteur ou pas.

C'est pourquoi est également revendiqué un procédé de mesure de la concentration d'une espèce chimique ou biochimique dans une solution comprenant les étapes consistant à :
- se munir d'un capteur selon l'invention décrite ci-dessus ;
- plonger ledit capteur dans une solution contenant l'espèce dont on veut déterminer la concentration ;
- effectuer une opération de contrôle de l'un des composants dudit capteur, l'autre étant électriquement bloqué, dans laquelle :
   - on applique une tension Vds fixe entre la grille et le drain et un courant Ids fixe entre le drain et la source,
   - on mesure la valeur de la tension Vgs entre la grille et la source, que l'on compare à une valeur étalon prédéterminée,
ladite opération étant effectuée au moins une fois avant ou pendant ladite mesure de concentration.

Le capteur selon l'invention trouve de nombreuses applications, pour la mesure de la concentration d'une espèce chimique ou biochimique dans une solution, choisie parmi les ions simples, les ions complexes, les molécules aptes à produire un composé ionique. De telles solutions peuvent être d'origine naturelle ou non. Ce sont par exemple des fluides biologiques (plasma sanguin notamment) ou des eaux dont on souhaite surveiller la qualité (rivières, effluents, ...).

La présente invention sera mieux comprise, et des détails en relevant apparaîtront, grâce à la description qui va être faite d'une de ses variantes de réalisation, en relation avec les figures annexées, dans lesquelles :
La fig.1 est une représentation schématique de la structure d'un capteur selon l'invention vu de dessus en transparence et avant encapsulation.
La fig. 2 représente le schéma électrique équivalent du même capteur.
La fig. 3 est une vue schématique en coupe du même capteur, montrant la structure au niveau de l'ISFET.
La fig. 4 est une vue schématique en coupe du même capteur, montrant la structure au niveau du MOSFET de contrôle.
La fig. 5 est une courbe caractéristique Ids(Vgs) d'un capteur selon l'invention, sans traitement UV.
La fig. 6 est une courbe caractéristique Ids(Vgs) du même capteur après traitement UV.

### EXEMPLE 1 : Capteur ISFET avec dispositif de contrôle intégré

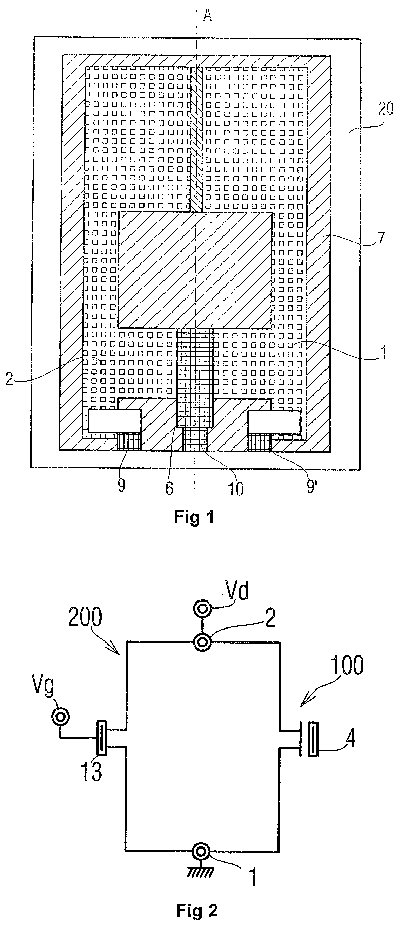

Le capteur présenté dans cet exemple est destiné à la mesure d'une espèce ionique dans une solution, par exemple un soluté dans un fluide corporel. Comme illustré aux figures 1 à 4, il est constitué de deux composants, à savoir le transistor ISFET 100 et le transistor MOSFET 200, qui sont structurellement imbriqués, puisqu'ils partagent leur source 1 et leur drain 2. Le transistor ISFET 100 est ainsi constitué du drain 2, de la source 1, de la membrane isolante 3, sensible à l'espèce ionique recherchée et de l'électrode de référence 4. Le transistor MOSFET 200 est constitué pour sa part du drain 2, de la source 1, de la grille 13 formée par l'électrode métallique 6 sur la couche isolante 5.

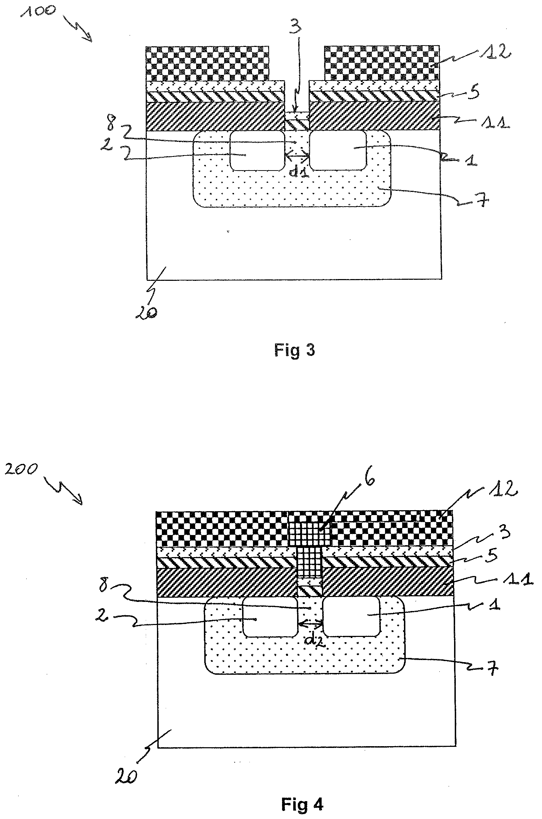

Comme on le voit sur les figures 3 et 4, le dispositif est composé d'un substrat de silicium 20, dans lequel un caisson semi-conducteur 7 a été créé par dopage P, et à l'intérieur duquel se trouvent les deux zones dopées N+ constituant respectivement la source 1 et le drain 2. L'intervalle existant entre ces deux zones est calculé pour former un canal de conduction. Il est de même longueur d au niveau de l'ISFET 100 et du MOSFET 200. Dans la partie intermédiaire, les zones dopées N+ sont à un intervalle D trop important pour qu'un canal existe. On a donc la partie intermédiaire 300, qui sépare partiellement les deux composants.

Toujours aux figures 3 et 4, le dispositif comprend une couche d'oxyde de champ 11 (par exemple SiO₂) qui recouvre le substrat à l'exception de la surface du canal. Puis une couche d'oxyde de grille 5 (par exemple SiO₂) et une couche sensible 3 (par exemple du nitrure de silicium Si₃N₄) sont déposées sur toute la surface. Ces deux couches recouvrent ainsi la surface du canal 8, et la couche d'oxyde de champ 11 là où elle existe.

La partie MOSFET 200 du dispositif reçoit ensuite une métallisation dans sa partie médiane pour réaliser l'électrode 6 de grille 13, tandis que la zone correspondante de l'ISFET 100 reste nue. La grille de l'ISFET 100 est réalisée par le système comprenant la membrane sensible 3 et l'électrode de référence 4 (représentée sur figure la 2) en solution. Les plots de contacts sont créés par cette même opération de métallisation.

Deux plots de contact 9, 9' sont reliés respectivement au drain 2 et à la source 1 communs, et le troisième plot de contact 10 est relié à la grille du MOSFET pour commander celui-ci lors des tests. Les plots servent ensuite à la connexion à des pistes métalliques. Finalement une couche de BCB (benzocyclobutène), dite de passivation, est déposée sur le capteur hormis sur la couche sensible et sur les plots de contact.
La figure 1 montre en transparence, l'agencement des différents éléments fonctionnels.

### EXEMPLE 2 : Procédé de fabrication de la puce silicium

Le procédé de fabrication qui est proposé ici présente l'énorme avantage d'être calqué sur les procédés de fabrication de masse des ISFET conventionnels, sans qu'aucune étape supplémentaire ne soit nécessaire. Les capteurs sont fabriqués à l'échelle industrielle par traitement d'une plaquette de silicium (wafer), sur laquelle plusieurs milliers de transistors sont implantés, avant d'être découpés et assemblés. La plaquette subit différentes étapes de dopage afin de modifier la nature du silicium.

Le tableau 1 ci-dessous résume ces étapes en indiquant les masques utilisés. Ces étapes sont identiques au procédé conventionnel, mais la forme des masques va permettre d'obtenir un ISFET intégrant un MOSFET de contrôle selon l'invention.

**Tableau 1 : Etapes de réalisation des ISFET et MOSFET intégrés**

| **Etapes principales** | | **Remarques** |
|---|---|---|
| 01 | Oxydation de masquage | |
| 02 | Photogravure du caisson d'isolation et implantation P | Masque n°1 |
| 03 | Photolithographie et implantation des zones de contacts P+ | Masque n°2 |
| 04 | Photolithographie et implantation des zones sources et drains N+ | Masque n°3 |
| 05 | Redistribution des dopants et croissance d'un oxyde de champ | |
| 06 | Photogravure de la grille et dépôt de SiO₂ (oxyde de grille) | Masque n °4 |
| 07 | Dépôt de la couche sensible (dépôt de Si₃N₄) | |
| 07 | Photogravure d'ouverture des contacts | Masque n°5 |
| 08 | Métallisation (dépôt métal) | |
| 09 | Photogravure de métallisation (dépôt plots et grille) | Masque n°6 |
| 09 | Passivation polymère (BCB) et photolithographie | Masque n°7 |

### EXEMPLE 3 : Caractérisation des capteurs à sec

Le dispositif selon l'invention présente l'avantage que l'on peut tester le bon fonctionnement de l'ISFET avant même l'assemblage du capteur, et sans avoir à le plonger dans un milieu liquide qui est pourtant indispensable à son fonctionnement. Le principe repose sur le contrôle du MOSFET associé, en milieu sec. Bien entendu, ce test peut aussi être réalisé sur le capteur assemblé et dans des phases ultérieures de la vie du capteur.

Le principe de cette caractérisation consiste à bloquer le transistor ISFET de sorte qu'aucun courant ne le traverse, et à piloter le transistor MOSFET, qui est alors le transistor de test. Dans le cas d'une mesure à sec, il n'y a pas d'amenée possible de potentiel sur la grille de l'ISFET. Le transistor ISFET est donc normalement bloqué (du moins si les courants de fuites sont neutralisés, par exemple par effacement UV. Pour piloter le transistor de test, il suffit d'amener une tension Vgs sur la grille. Lorsque la différence de potentiel entre la grille et la source est nulle (Vgs = 0 V), il n'y a pas de porteurs pour conduire un courant. Ce courant source-drain (Ids) est modulé par la tension de grille Vgs. Dans notre cas, il faut appliquer une tension Vgs supérieure à un certain seuil appelé V_{T}. Lorsque le transistor conduit, une augmentation de la polarisation entre le drain et la source (Vds) augmente le courant.

Le test des capteurs est réalisé de la même façon que pour le test de composants MOSFET dans l'état de l'art de la microélectronique. Les équipements nécessaires à la caractérisation des composants sur plaquette sont :
- une station de test sous pointe commerciale (probe station) : nous avons utilisé une Station semi-automatrique sous pointes (modèle PA 200 de chez Karl Suss), et
- un analyseur paramétrique pour semi-conducteur (testeur paramétrique Agilent).

En pratique, la mesure consiste à amener des pointes de mesures sur le drain, la source et la grille. La source et le substrat sont connectés à la masse. Le testeur est un analyseur paramétrique, commercialisé par Agilent ou un générateur de tension et courant couplé à des mesureurs de tension et de courant de précision (SourceMeter 2602 de Keithley).

Pour le composant ici décrit, la source et le substrat sont court-circuités au niveau du silicium. Le drain est porté à un potentiel supérieur à ceux de la source et du substrat, ce qui crée un champ électrique entre la source et le drain. Le capteur est polarisé : la tension appliquée sur le drain est fixée à Vds = 2 V. La tension Vgs appliquée entre la grille et la source est incrémentée par pas successifs de 0,1 V. Le système mesure les courants Ids circulant dans le canal. La plage étudiée va de 0 à 5 V.

Le courant mesuré pour chaque point de polarisation est enregistré et la caractéristique Ids (Vgs) est tracée. Il est alors possible d'extraire des valeurs et de déterminer le courant de fuite loff (à Vgs = 0V), ainsi que la tension de seuil V_{T} (lorsque le transistor devient conducteur) et la transconductance Kp (pente dans la partie où le transistor conduit).

Des spécifications définies au préalable permettent de trier les puces. Les puces ne répondant pas aux spécifications peuvent alors être encrées ou repérées sur un fichier informatique. Si on utilise un support de type bobine, il est possible d'identifier de manière automatique les puces non conformes et de les repérer par perçage (punch) du film.

### EXEMPLE 4 : Intérêt du traitement UV

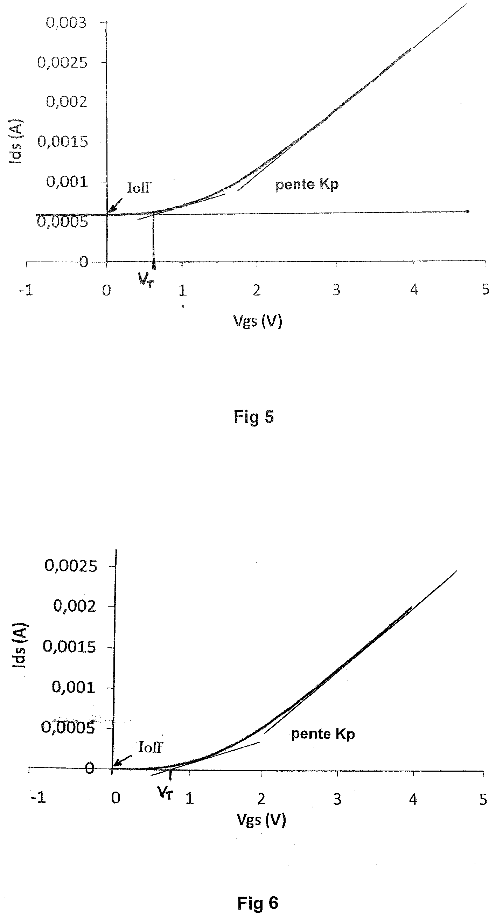

Une première série de mesures a été effectuée sur des capteurs d'une plaquette n'ayant pas subit d'effacement UV. La plaquette ne présentait pas, en sortie de fonderie, des résultats corrects. Les rendements étaient très faibles. Les caractéristiques étaient hors spécifications : forts courants de fuites et par voie de conséquence une très forte disparité au niveau des tensions de seuil. En effet, comme on le voit sur la figure 5, on constate un décalage vers le haut de la courbe (Vgs n'est pas nul pour Ids = 0, ce qui indique l'existence d'un courant de fuite. Ce courant de fuite peut être suffisamment élevé pour fausser la mesure lors de l'application, voire la rendre impossible. Il en va de même pour la tension de seuil V_{T}.

Cette plaquette a ensuite subi un traitement par UV. L'opération d'effacement se fait par un passage de 15 à 20 minutes sous rayons UV à 254 nm. Les mesures électriques ont été répétées. Les résultats obtenus sont alors corrects et répondent aux spécifications demandées dans le cahier des charges. Comme on le voit à la figure 6, dans ce cas, le courant de fuite a disparu. La tension de seuil est lue sur la courbe à 0,8 V. Tous les capteurs testés ont montré les mêmes résultats.

### EXEMPLE 5 : Test des capteurs en milieu liquide

Le dispositif selon l'invention présente aussi l'avantage de pouvoir être contrôlé alors qu'il est placé en milieu liquide.

On va dans ce cas de figure, réaliser une seule mesure, et comparer les paramètres loff (courant de fuite), V_{T} (tension de seuil) et Kp (transconductance) aux valeurs de référence (avec un degré de tolérances +/-) pour conclure quant au fonctionnement normal du capteur. On peut procéder, puisqu'on est en milieu liquide, soit au test du MOSFET, soit à celui de l'ISFET.

### Contrôle à l'aide du MOSFET en milieu liquide

Ce test peut notamment servir à contrôler le bon état de marche du capteur en cours de mesure. Le principe de la mesure consiste à bloquer le transistor ISFET et à piloter le transistor MOSFET. La même procédure que celle décrite à l'exemple 3 pour un test à sec est employée pour contrôler le transistor MOSFET en solution. Il faut en plus bloquer le transistor ISFET en appliquant une tension très inférieure à V_{T}. Il est alors possible de relier électriquement l'électrode de référence à la source, ou bien (ce que l'on préférera) d'appliquer une tension fortement négative : la tension de l'électrode de référence sera choisie nettement inférieure à -3 V (VEref << -3 V).

### Mesure à l'aide de l'ISFET en milieu liquide

Ce test peut notamment servir à la calibration du capteur avant mesure. Le principe de la mesure consiste à bloquer le transistor MOSFET et à piloter le transistor ISFET. Dans le cas d'une mesure avec l'ISFET en solution, on relie la grille et la source du MOSFET afin que celui-ci soit bloqué (Vgs = 0 V). Pour piloter le transistor ISFET, il suffit d'amener une tension sur l'électrode de référence. Lorsque cette tension est supérieure à la tension de seuil de l'ISFET, un courant Ids apparaît. Ce courant est ensuite modulé par la différence de potentiel entre l'électrode de référence et la source.

Dans les deux cas, on opère avec un testeur (Agilent) ou avec un générateur de tension et courant couplé à des mesureurs de tension et de courant de précision (SourceMeter 2602 de Keithley). La polarisation est obtenue de la manière suivante :

La source et le substrat sont reliés à la masse, et sont court-circuités au niveau du silicium. Le drain est porté à un potentiel supérieur à ceux de la source et du substrat, ce qui crée un champ électrique entre la source et le drain. Le capteur est polarisé à Vds = 2 V. La tension appliquée entre la grille et la source (Vgs pour le MOSFET) ou entre l'électrode de référence et la source (Vref - Vs pour l'ISFET) est fixée. Le courant mesuré pour ce point de polarisation est enregistré et reporté sur une courbe étalon Ids (Vgs) précédemment établie.

Si les valeurs de Ids et Vgs correspondent aux valeurs attendues, on conclut que le capteur est en bon état de marche.

### Tableau récapitulatif des modes de test

Les différents modes de test ou de contrôle présentés aux exemples 3 et 5 sont résumés dans le tableau 2.

**Tableau 2 :**

| **Type de test** | **Etat du MOSFET** | **Etat de l'ISFET** | **Polarisation appliquée** |
|---|---|---|---|
| Test à sec du Capteur MOSFET | Ids est fonction de la tension appliquée à la grille. Le MOSFET conduit | L'ISFET est bloqué (Ids=0). Pas de conduction au niveau de la grille. | Sur la grille MOSFET, la tension = [0 à 5] V. Pas d'électrode de référence. |
| Test en solution du Capteur MOSFET | Ids est fonction de la tension appliquée à la grille. Le MOSFET conduit. | L'ISFET est bloqué (Ids=0). Pour cela l'électrode de référence est portée à un potentiel tel que : VEref-Vs << V_{T} | Sur la grille du MOSFET = 0 V et VEref << -3 V |
| Test en solution du Capteur ISFET | Le MOSFET est bloqué (Ids=0). Pour cela, l'électrode de grille est portée à un potentiel tel que Vg-Vs << V_{T}. | L'ISFET conduit. Ids est fonction de la tension appliquée à l'électrode de référence. | VEref = [0 à 5] V Vg = Vs |

## Revendications

1. Capteur pour la mesure de la concentration d'une espèce dans une solution, ladite espèce étant sous forme ionique ou apte à produire un composé ionique, le capteur comprenant au moins deux composants montés en parallèle, à savoir i) un transistor ISFET (100) doté d'un drain, d'une source, d'une membrane isolante (3) sensible à ladite espèce, et relié à une électrode de référence (4), et ii) un transistor MOSFET (200) doté d'un drain, d'une source, d'une grille (13) formée d'une couche isolante (5) recouverte d'une électrode métallique (6), **caractérisé en ce que** la source (1) et le drain (2) sont communs auxdits deux composants.

2. Capteur selon la revendication 1, **caractérisé en ce qu'**il comprend au moins un substrat semi-conducteur (7) présentant deux zones dopées avec des porteurs de charges électriques, formant respectivement une zone source (1) et une zone drain (2) séparées par un intervalle s'étendant selon un axe A, ledit intervalle constituant un canal (8) de conduction entre lesdites deux zones sur au moins deux segments dudit axe A,
- ledit canal étant recouvert d'au moins une couche de matériau isolant électrique (5), elle-même recouverte d'au moins une couche (3) d'un matériau isolant sensible à ladite espèce,
- ladite couche sensible (3) étant nue sur un premier segment dudit axe A, pour obtenir ledit composant ISFET (100), et
- ladite couche sensible (3) étant recouverte d'un métal faisant fonction d'électrode de grille (6) sur un deuxième segment dudit axe A, pour constituer ledit composant MOSFET (200).

3. Capteur selon la revendication précédente, **caractérisé en ce que** la zone source (1) et la zone drain (2) s'étendent longitudinalement de part et d'autre de l'axe A, à une distance d₁ autorisant la conduction électrique entre elles au niveau du premier segment, et à une distance d₂ autorisant la conduction électrique entre elles au niveau du deuxième segment.

4. Capteur selon la revendication précédente, **caractérisé en ce que**, au niveau d'un segment intermédiaire compris entre le premier et le deuxième segments, la zone source (1) et la zone drain (2) s'étendent longitudinalement de part et d'autre de l'axe A, à une distance D interdisant la conduction électrique entre elles, de manière à obtenir une plage (300) dépourvue de canal de conduction, qui sépare le composant ISFET (100) et le composant MOSFET (200).

5. Capteur selon l'une des revendications précédentes, **caractérisé en ce qu'**il comprend deux plots de contact (9', 9) reliés respectivement à la source (1) et au drain (2) communs, et un plot de contact (10) relié à la grille du MOSFET (200).

6. Capteur selon l'une des revendications précédentes, **caractérisé en ce qu'**il est réalisé à partir d'un substrat semi-conducteur, ledit substrat étant fait à base de silicium, et appartenant au type P avec un drain et une source dopées N+ ou au type N avec un drain et une source dopées P+.

7. Capteur selon l'une des revendications 2 à 6, **caractérisé en ce que** ladite au moins une couche de matériau sensible est une couche sensible aux ions H⁺ réalisée en un matériau choisi parmi le nitrure de silicium (Si₃N₄), l'oxyde d'aluminium (Al₂O₃), le pentoxyde de tantale (Ta₂O₅).

8. Capteur selon la revendication précédente, **caractérisé en ce que** ladite couche de matériau sensible aux ions H⁺ est recouverte d'une couche d'un matériau sensible réagissant avec une espèce chimique ou biochimique donnée, un des produits de la réaction induisant une variation de pH.

9. Capteur selon l'une des revendications 2 à 6, **caractérisé en ce que** ladite au moins une couche de matériau sensible est une couche sensible aux ions K⁺, Na⁺ et Li⁺, Ca⁺⁺, Cl⁻, nitrates ou ammonium, réalisée en un matériau choisi parmi les polymères contenant un composé ionophore ou les aluminosilicates modifiés par implantation ionique.

10. Capteur selon l'une des revendications précédentes, **caractérisé en ce qu'**il est dépourvu de charges électriques piégées au niveau de la grille de l'ISFET, de sorte qu'il peut être soumis à un test électrique de validation en milieu sec.

11. Procédé de fabrication d'un capteur de mesure d'une espèce dans une solution, ladite espèce étant sous forme ionique ou apte à produire un composé ionique, ledit capteur comprenant au moins deux composants montés en parallèle, à savoir i) un transistor ISFET (100) doté d'un drain, d'une source, d'une membrane isolante (3) sensible à ladite espèce et relié à une électrode de référence (4), et ii) un transistor MOSFET (200) doté d'un drain, d'une source et d'une grille formée d'une couche isolante (5) recouverte d'une électrode métallique (6), le procédé étant **caractérisé en ce qu'**il comprend au moins une étape de création d'une source (1) et d'un drain (2) qui sont communs à l'ISFET et au MOSFET.

12. Procédé de fabrication selon la revendication précédente **caractérisé en ce qu'**il il comprend les étapes successives consistant à :
- doper fortement deux zones d'un substrat semi-conducteur (7) avec des porteurs de charges électriques,
- réaliser au moins une couche de matériau isolant (5), comprenant un oxyde de grille,
- réaliser ladite membrane sensible (3) à ladite espèce,
- réaliser une électrode métallique (6) et des plots de contact (9, 9', 10),
lesdites deux zones dopées formant respectivement une source (1) et un drain (2) qui sont communs à l'ISFET et au MOSFET, l'ISFET et le MOSFET étant montés en parallèle.

13. Procédé de fabrication selon la revendication précédente, **caractérisé en ce que**
- on réalise un dopage de la zone source (1) et de la zone drain (2) en séparant celles-ci par un intervalle s'étendant selon un axe A, ledit intervalle constituant un canal (8) de conduction entre lesdites deux zones sur au moins deux segments dudit axe A,
- on recouvre ledit intervalle sur lesdits au moins deux segments dudit axe A, d'au moins une couche (5) de matériau isolant électrique apte à faire fonction de grille,
- on recouvre ladite couche (5) de matériau isolant électrique d'au moins une couche (3) d'un matériau isolant sensible à ladite espèce, et
- on laisse nue ladite couche sensible sur un premier segment dudit axe A, pour obtenir ledit composant ISFET (100),
- tandis que l'on recouvre ladite couche sensible d'un métal faisant fonction d'électrode (6) sur un deuxième segment dudit axe A, pour obtenir ledit composant MOSFET (200).

14. Procédé de fabrication selon la revendication précédente, **caractérisé en ce que** lorsqu'on dope la zone source (1) et la zone drain (2), on les sépare par un intervalle s'étendant selon l'axe A, tel que :
- il existe une distance d₁ et une distance d₂ autorisant la conduction électrique entre lesdites zones, respectivement au niveau du premier segment et du deuxième segment, de manière à obtenir deux canaux de conduction desservant respectivement le composant ISFET (100) et le composant MOSFET (200), et
- il existe une distance D interdisant la conduction électrique entre lesdites zones au niveau d'un segment intermédiaire compris entre le premier et le deuxième segments, de manière à obtenir une plage dépourvue de canal de conduction, qui sépare ledit composant ISFET et ledit composant MOSFET.

15. Procédé de fabrication selon l'une des revendications 12 à 14, **caractérisé en ce que** l'on crée deux plots de contact (9', 9) reliés respectivement à la source (1) et au drain (2) communs, et un plot de contact (10) relié à la grille du MOSFET (100).

16. Procédé de fabrication selon l'une des revendications 12 à 15, caractérisé en ce qu'il comprend un test de validation en milieu sec dudit capteur consistant à :
- a) mesurer le courant Ids entre le drain (2) et la source (1) lorsqu'on fait varier la tension Vgs entre la grille (5) et la source, tout en maintenant constante la tension de polarisation Vds entre la source et le drain, et enregistrer la courbe caractéristique Ids = f(Vgs) ;
- b) déterminer le courant de fuite I_{off} à Vgs = 0, la tension de seuil V_{T}, et la valeur de la transconductance ;
- c) comparer les valeurs obtenues à l'étape b) à des valeurs prédéterminées de validation.

17. Procédé de fabrication selon la revendication précédente, **caractérisé en ce qu'**il comprend une étape consistant à soumettre le capteur à une irradiation par rayons UV pour éliminer les charges électriques piégées au niveau de la grille de l'ISFET, avant ledit test de validation.

18. Procédé de fabrication selon la revendication précédente, **caractérisé en ce que** l'élimination des charges électriques piégées est effectuée par insolation à une longueur d'onde comprise entre 200 nm et 300 nm durant 5 min à 30 min.

19. Application du capteur selon l'une des revendications 1 à 10 à la mesure de la concentration d'une espèce chimique ou biochimique dans une solution, choisie parmi les ions simples, les ions complexes, les molécules aptes à produire un composé ionique.

20. Procédé de mesure de la concentration d'une espèce chimique ou biochimique dans une solution comprenant les étapes consistant à :
- se munir d'un capteur selon l'une des revendications 1 à 10 ;
- plonger ledit capteur dans une solution contenant l'espèce dont on veut déterminer la concentration ;
- effectuer une opération de contrôle de l'un des composants dudit capteur, l'autre étant électriquement bloqué, dans laquelle :
- on applique une tension Vds fixe entre la grille et le drain et un courant Ids fixe entre le drain et la source,
- on mesure la valeur de la tension Vgs entre la grille et la source, que l'on compare à une valeur étalon prédéterminée,
ladite opération étant effectuée au moins une fois avant ou pendant ladite mesure de concentration.

## Patentansprüche

1. Sensor zur Messung der Konzentration einer Spezies in einer Lösung, wobei die Spezies in ionischer Form ist oder geeignet ist, eine ionische Verbindung zu erzeugen, wobei der Sensor mindestens zwei Komponenten aufweist, die parallel angeordnet sind, das heißt i) einen ISFET Transistor (100), der mit einem Drain, einer Source, einer isolierenden Membran (3) ausgestattet ist, die gegenüber der Spezies sensitiv ist, und mit einer Referenzelektrode (4) verbunden ist, und ii) einen MOSFET Transistor (200), der mit einem Drain, einer Source, einem Gate (13) ausgestattet ist, das aus einer isolierenden Schicht (5) gebildet ist, die mit einer metallischen Elektrode (6) bedeckt ist, **dadurch gekennzeichnet, dass** die Source (1) und der Drain (2) den zwei Komponenten gemeinsam sind.

2. Sensor nach Anspruch 1, **dadurch gekennzeichnet, dass** er mindestens ein Halbleitersubstrat (7) aufweist, das zwei dotierte Bereiche mit elektrischen Ladungsträgern aufweist, die jeweils einen Source-Bereich (1) und einen Drain-Bereich (2) bilden, die durch einen Zwischenraum getrennt sind, der sich entlang einer Achse A erstreckt, wobei der Zwischenraum einen Leitungskanal (8) zwischen den zwei Bereichen auf mindestens zwei Segmenten der Achse A bildet,
- wobei der Kanal mit mindestens einer Schicht aus elektrisch isolierendem Material (5) bedeckt ist, die selbst mit mindestens einer Schicht (3) aus einem isolierenden Material bedeckt ist, das gegenüber der Spezies sensitiv ist,
- wobei die sensitive Schicht (3) auf einem ersten Segment der Achse A freigelegt ist, um die ISFET-Komponente (100) zu erhalten und
- wobei die sensitive Schicht (3) mit einem Metall, das als Gate-Elektrode (6) dient, auf einem zweiten Segment der Achse A bedeckt ist, um die MOSFET-Komponente (200) zu bilden.

3. Sensor nach dem vorhergehenden Anspruch, **dadurch gekennzeichnet, dass** sich der Source-Bereich (1) und der Drain-Bereich (2) auf beiden Seiten der Achse A in Längsrichtung in einem Abstand d₁, der den Stromfluss zwischen ihnen am ersten Segment ermöglicht, und in einem Abstand d₂, der den Stromfluss zwischen ihnen an dem zweiten Segment ermöglicht, erstrecken.

4. Sensor nach dem vorhergehenden Anspruch, **dadurch gekennzeichnet, dass** sich der Source-Bereich (1) und der Drain-Bereich (2) auf beiden Seiten der Achse A in Längsrichtung in einem Abstand D, der den Stromfluss zwischen ihnen verhindert, an einem Zwischensegment zwischen dem ersten und dem zweiten Segment derart erstrecken, um einen Bereich (300) zu erhalten, der keinen Leitungskanal aufweist, der die ISFET-Komponente (100) und die MOSFET-Komponente (200) trennt.

5. Sensor nach einem der vorhergehenden Ansprüche, **dadurch gekennzeichnet, dass** er zwei Kontaktplättchen (9', 9), die jeweils an die gemeinsame Source (1) und an den gemeinsamen Drain (2) angeschlossen sind, und ein Kontaktplättchen (10) aufweist, das an das Gate des MOSFETs (200) angeschlossen ist.

6. Sensor nach einem der vorhergehenden Ansprüche, **dadurch gekennzeichnet, dass** er ausgehend von einem Halbleitersubstrat hergestellt ist, wobei das Substrat auf der Grundlage von Silizium erstellt ist und zum p-Typ mit einem Drain und einer Source, die n+ dotiert sind, oder zum n-Typ mit einem Drain und einer Source, die p+ dotiert sind, gehört.

7. Sensor nach einem der Ansprüche 2 bis 6, **dadurch gekennzeichnet, dass** mindestens eine sensitive Materialschicht eine Schicht ist, die gegenüber H⁺-Ionen sensitiv ist, die aus einem Material hergestellt ist, das aus Siliziumnitrid (Si₃N₄), Aluminiumoxid (Al₂O₃), Tantalpentoxid (Ta₂O₅) ausgewählt ist.

8. Sensor nach dem vorhergehenden Anspruch, **dadurch gekennzeichnet, dass** die Materialschicht, die gegenüber H⁺-Ionen sensitiv ist, mit einer Schicht aus einem sensitiven Material bedeckt ist, das mit einer bestimmten chemischen oder biochemischen Spezies reagiert, wobei eines der Produkte der Reaktion eine Änderung des pH-Wertes induziert.

9. Sensor nach einem der Ansprüche 2 bis 6, **dadurch gekennzeichnet, dass** die mindestens eine sensitive Materialschicht eine Schicht ist, die gegenüber K⁺- , Na⁺- und Li⁺- , Ca⁺⁺- , Cl⁻-Ionen, Nitraten oder Ammonium sensitiv ist, die aus einem Material erstellt ist, das aus den Polymeren, die eine ionophore Zusammensetzung enthalten, oder den durch Ionenimplantation modifizierten Alumosilikaten ausgewählt ist.

10. Sensor nach einem der vorhergehenden Ansprüche, **dadurch gekennzeichnet, dass** er an dem Gate des ISFETs derart frei von eingefangenen elektrischen Ladungen ist, dass er einer elektrischen Validierungsprüfung in trockener Umgebung unterzogen werden kann.

11. Verfahren zur Herstellung eines Sensors zur Messung einer Spezies in einer Lösung, wobei die Spezies in ionischer Form ist oder geeignet ist, eine ionische Verbindung zu erzeugen, wobei der Sensor mindestens zwei Komponenten aufweist, die parallel angeordnet sind, das heißt i) einen ISFET Transistor (100), der mit einem Drain, einer Source, einer isolierenden Membran (3) ausgestattet ist, die gegenüber der Spezies sensitiv ist, und mit einer Referenzelektrode (4) verbunden ist, und ii) einen MOSFET Transistor (200), der mit einem Drain, einer Source und einem Gate ausgestattet ist, das aus einer isolierenden Schicht (5) gebildet ist, die mit einer metallischen Elektrode (6) bedeckt ist, wobei das Verfahren **dadurch gekennzeichnet ist, dass** es mindestens einen Schritt des Erstellens einer Source (1) und eines Drains (2) aufweist, die dem ISFET und dem MOSFET gemeinsam sind.

12. Verfahren zur Herstellung nach dem vorhergehenden Anspruch, **dadurch gekennzeichnet, dass** es die folgenden Schritte aufweist, die darin bestehen:
- zwei Bereiche eines Halbleitersubstrats (7) mit elektrischen Ladungsträgern stark zu dotieren,
- mindestens eine Schicht (5) aus einem isolierenden Material herzustellen, die ein Gate-Oxid umfasst,
- die Membran (3) herzustellen, die gegenüber der Spezies sensitiv ist,
- eine metallische Elektrode (6) und Kontaktplättchen (9, 9', 10) herzustellen,
wobei die beiden dotierten Bereiche jeweils eine Source (1) und einen Drain (2) bilden, die dem ISFET und dem MOSFET gemeinsam sind, wobei der ISFET und der MOSFET parallel angeordnet sind.

13. Verfahren zur Herstellung nach dem vorhergehenden Anspruch, **dadurch gekennzeichnet, dass**
- ein Dotieren des Source-Bereichs (1) und des Drain-Bereichs (2) durchgeführt wird, indem diese durch einen Zwischenraum getrennt werden, der sich entlang einer Achse A erstreckt, wobei der Zwischenraum einen Leitungskanal (8) zwischen den zwei Bereichen auf mindestens zwei Segmenten der Achse A bildet,
- der Zwischenraum auf den mindestens zwei Segmenten der Achse A mit mindestens einer Schicht (5) aus elektrisch isolierendem Material bedeckt wird, das geeignet ist, als Gate zu dienen,
- die Schicht (5) aus elektrisch isolierendem Material mit mindestens einer Schicht (3) aus einem isolierenden Material bedeckt wird, das gegenüber der Spezies sensitiv ist, und
- die sensitive Schicht auf einem ersten Segment der Achse A freigelassen wird, um die ISFET-Komponente (100) zu erhalten,
- während die sensitive Schicht mit einem Metall, das als Elektrode (6) dient, auf einem zweiten Segment der Achse A bedeckt wird, um die MOSFET-Komponente (200) zu erhalten.

14. Verfahren zur Herstellung nach dem vorhergehenden Anspruch, **dadurch gekennzeichnet, dass**, wenn der Source-Bereich (1) und der Drain-Bereich (2) dotiert werden, sie durch einen Zwischenraum getrennt werden, der sich entlang der Achse A erstreckt, wobei:
- ein Abstand d₁ und ein Abstand d₂ bestehen, die den Stromfluss zwischen den Bereichen jeweils an dem ersten Segment und an dem zweiten Segment derart ermöglichen, um zwei Leitungskanäle zu erhalten, die jeweils zu der ISFET-Komponente (100) und der MOSFET-Komponente (200) führen, und
- ein Abstand D besteht, der den Stromfluss zwischen den Bereichen an einem Zwischensegment verhindert, der zwischen dem ersten und dem zweiten Segment derart liegt, um einen Bereich zu erhalten, der keinen Leitungskanal aufweist, der die ISFET-Komponente und die MOSFET-Komponente trennt.

15. Verfahren zur Herstellung nach einem der Ansprüche 12 bis 14, **dadurch gekennzeichnet, dass** zwei Kontaktplättchen (9', 9), die jeweils an die gemeinsame Source (1) und an den gemeinsamen Drain (2) angeschlossen werden, und ein Kontaktplättchen (10) erstellt werden, das an das Gate des MOSFETs (100) angeschlossen wird.

16. Verfahren zur Herstellung nach einem der Ansprüche 12 bis 15, **dadurch gekennzeichnet, dass** es eine Validierungsprüfung in trockener Umgebung des Sensors aufweist, die darin besteht:
- a) den Strom Ids zwischen dem Drain (2) und der Source (1) zu messen, wenn die Spannung Vgs zwischen dem Gate (5) und der Source geändert wird, während die Polarisationsspannung Vds zwischen der Source und dem Drain konstant gehalten wird, und die Kennlinie Ids = f(Vgs) aufzuzeichnen;
- b) den Kriechstrom I_{off} bei Vgs - 0, die Schwellenspannung V_{T} und den Wert der Transkonduktanz zu bestimmen;
- c) die in dem Schritt b) erhaltenen Werte mit vorbestimmten Validierungswerten zu vergleichen.

17. Verfahren zur Herstellung nach dem vorhergehenden Anspruch, **dadurch gekennzeichnet, dass** es einen Schritt aufweist, der darin besteht, den Sensor einer Bestrahlung durch UV-Strahlen auszusetzen, um die eingefangenen elektrischen Ladungen an dem Gate des ISFETs vor der Validierungsprüfung zu beseitigen.

18. Verfahren zur Herstellung nach dem vorhergehenden Anspruch, **dadurch gekennzeichnet, dass** das Beseitigen der eingefangenen elektrischen Ladungen durch Belichten mit einer Wellenlänge, die zwischen 200 nm und 300 nm beträgt, für 5 min bis 30 min durchgeführt wird.

19. Anwendung des Sensors nach einem der Ansprüche 1 bis 10 zur Messung der Konzentration einer chemischen oder biochemischen Spezies in einer Lösung, die aus einfachen Ionen, komplexen Ionen, Molekülen, die geeignet sind, eine ionische Verbindung zu erzeugen, ausgewählt ist.

20. Verfahren zur Messung der Konzentration einer chemischen oder biochemischen Spezies in einer Lösung, das die folgenden Schritte aufweist, die darin bestehen:
- sich mit einem Sensor nach einem der Ansprüche 1 bis 10 auszustatten;
- den Sensor in eine Lösung einzutauchen, die die Spezies enthält, deren Konzentration bestimmt werden soll;
- einen Prüfvorgang von einer der Komponenten des Sensors durchzuführen, wobei die andere elektrisch blockiert ist, wobei:
- eine festgelegte Spannung Vds zwischen dem Gate und dem Drain und ein festgelegter Strom Ids zwischen dem Drain und der Source angelegt werden,
- der Wert der Spannung Vgs zwischen dem Gate und der Source gemessen wird, der mit einem vorbestimmten Standardwert verglichen wird,
wobei der Vorgang mindestens einmal vor oder während der Messung der Konzentration durchgeführt wird.

## Claims

1. Sensor for measuring the concentration of a species in a solution, said species being in ionic form or able to produce an ionic compound, the sensor comprising at least two components mounted in parallel, namely i) an ISFET transistor (100) provided with a drain, a source and an insulating membrane (3) sensitive to said species, which transistor is connected to a reference electrode (4), and ii) a MOSFET transistor (200) provided with a drain, a source and a gate (13) formed from an insulating layer (5) covered with a metal electrode (6), **characterized in that** the source (1) and drain (2) are common to said two components.

2. Sensor according to Claim 1, **characterized in that** it comprises at least one semiconductor substrate (7) having two zones doped with electrical charge carriers, forming a source zone (1) and a drain zone (2), respectively, which zones are separated by an interval extending along an axis A, said interval forming a conduction channel (8) between said two zones over at least two sections of said axis A,
- said channel being covered with at least one layer (5) of electrically insulating material, itself covered with at least one layer (3) of an insulating material sensitive to said species,
- said sensitive layer (3) being bare in a first section of said axis A, in order to obtain said ISFET component (100), and
- said sensitive layer (3) being covered with a metal performing the function of gate electrode (6) in a second section of said axis A, in order to form said MOSFET component (200).

3. Sensor according to the preceding claim, **characterized in that** the source zone (1) and the drain zone (2) extend longitudinally on either side of the axis A, at a distance d₁ permitting electrical conduction therebetween at the level of the first section, and at a distance d₂ permitting electrical conduction therebetween at the level of the second section.

4. Sensor according to the preceding claim, **characterized in that**, at the level of an intermediate section comprised between the first and second sections, the source zone (1) and the drain zone (2) extend longitudinally on either side of the axis A, at a distance D preventing electrical conduction therebetween, so as to obtain a land (300) devoid of conduction channel, that separates the ISFET component (100) and the MOSFET component (200).

5. Sensor according to one of the preceding claims, **characterized in that** it comprises two contact pads (9' , 9), which pads are connected to the common source (1) and common drain (2), respectively, and a contact pad (10) connected to the gate of the MOSFET (200).

6. Sensor according to one of the preceding claims, **characterized in that** it is produced from a semiconductor substrate, said substrate being made based on silicon, and belonging to the P type with a drain and a source doped N⁺ or to the N type with a drain and a source doped P⁺.

7. Sensor according to one of Claims 2 to 6, **characterized in that** said at least one layer of sensitive material is a layer sensitive to H⁺ ions, which layer is made from a material chosen from silicon nitride (Si₃N₄), aluminum oxide (Al₂O₃) and tantalum pentoxide (Ta₂O₅).

8. Sensor according to the preceding claim, **characterized in that** said layer of material sensitive to H⁺ ions is covered with a layer of a sensitive material that reacts with a given biochemical or chemical species, one of the products of the reaction inducing a variation in pH.

9. Sensor according to one of Claims 2 to 6, **characterized in that** said at least one layer of sensitive material is a layer sensitive to K⁺, Na⁺ and Li⁺, Ca⁺⁺, Cl⁻, nitrates or ammonium, made of a material chosen from polymers containing an ionophore compound or aluminosilicates modified by ion implantation.

10. Sensor according to one of the preceding claims, **characterized in that** it is devoid of electrical charges trapped in the gate of the ISFET, so that it may be subjected to an electrical validation test in a dry medium.

11. Process for manufacturing a sensor for measuring a species in a solution, said species being in ionic form or able to produce an ionic compound, said sensor comprising at least two components mounted in parallel, namely i) an ISFET transistor (100) provided with a drain, a source and an insulating membrane (3) sensitive to said species, which transistor is connected to a reference electrode (4), and ii) a MOSFET transistor (200) provided with a drain, a source and a gate formed from an insulating layer (5) covered with a metal electrode (6), the process being **characterized in that** it comprises at least one step of creating a source (1) and a drain (2) that are common to the ISFET and MOSFET.

12. Manufacturing process according to the preceding claim **characterized in that** it comprises the successive steps consisting in:
- highly doping two zones of a semiconductor substrate (7) with electrical charge carriers,
- producing at least one layer (5) of insulating material, comprising a gate oxide,
- producing said membrane (3) sensitive to said species,
- producing a metal electrode (6) and contact pads (9, 9', 10),
said two doped zones respectively forming a source (1) and a drain (2) that are common to the ISFET and MOSFET, the ISFET and MOSFET being mounted in parallel.

13. Manufacturing process according to the preceding claim, **characterized in that**
- the source zone (1) and the drain zone (2) are doped together separating them by an interval extending along an axis A, said interval forming a conduction channel (8) between said two zones over at least two sections of said axis A,
- said interval is covered, over said at least two sections of said axis A, with at least one layer (5) of electrically insulating material able to perform a gate function,
- said layer (5) of electrically insulating material is covered with a least one layer (3) of an insulating material sensitive to said species, and
- said sensitive layer is left bare in a first section of said axis A, in order to obtain said ISFET component (100),
- whereas said sensitive layer is covered with a metal performing an electrode (6) function in a second section of said axis A, in order to obtain said MOSFET component (200).

14. Manufacturing process according to the preceding claim, **characterized in that** when the source zone (1) and the drain zone (2) are doped, they are separated by an interval extending along the axis A, such that:
- there is a distance d₁ and a distance d₂ permitting electrical conduction between said zones at the level of the first section and second section, respectively, so as to obtain two conduction channels serving the ISFET component (100) and the MOSFET component (200), respectively, and
- there is a distance D preventing electrical conduction between said zones at the level of an intermediate section comprised between the first and second sections, so as to obtain a land devoid of conduction channel, which separates said ISFET component and said MOSFET component.

15. Manufacturing process according to one of Claims 12 to 14, **characterized in that** two contact pads (9', 9) connected to the common source (1) and common drain (2), respectively, and a contact pad (10) connected to the gate of the MOSFET (100), are created.

16. Manufacturing process according to one of Claims 12 to 15, **characterized in that** it comprises a validation test in a dry medium of said sensor, consisting in:
- a) measuring the current Ids between the drain (2) and source (1) when the voltage Vgs between the gate (5) and the source is varied, while the bias voltage Vds between the source and drain is kept constant, and recording the characteristic curve Ids = f(Vgs);
- b) determining the leakage current I_{off} at Vgs = 0, the threshold voltage V_{T}, and the value of the transconductance; and
- c) comparing the values obtained in step b) to predetermined validation values.

17. Manufacturing process according to the preceding claim, **characterized in that** it comprises a step consisting in irradiating the sensor with UV rays in order to eliminate electrical charges trapped in the gate of the ISFET, before said validation test.

18. Manufacturing process according to the preceding claim, **characterized in that** the trapped electrical charges are eliminated by exposure to a wavelength comprised between 200 nm and 300 nm for 5 min to 30 min.

19. Application of the sensor according to one of Claims 1 to 10 to the measurement of the concentration of a biochemical or chemical species in a solution, chosen from simple ions, complex ions and molecules able to produce an ionic compound.

20. Method for measuring the concentration of a biochemical or chemical species in a solution comprising the steps consisting in:
- providing a sensor according to one of Claims 1 to 10;
- submerging said sensor in a solution containing the species the concentration of which it is desired to determine;
- carrying out an operation of controlling one of the components of said sensor, the other being electrically turned off, in which operation:
- a fixed voltage Vds is applied between the gate and the drain and a fixed current Ids is applied between the drain and the source, and
- the value of the voltage Vgs between the gate and source is measured, which is compared to a predetermined standard value,
said operation being carried out at least once before or during said concentration measurement.
